**Europäisches Patentamt**

**European Patent Office**

**Office européen des brevets**

(11) Numéro de publication: **0 042 329**
**A1**

## DEMANDE DE BREVET EUROPEEN

(21) Numéro de dépôt: **81400917.1**

(51) Int. Cl.³: **H 04 Q 11/04, H 04 L 11/20**

(22) Date de dépôt: **10.06.81**

(30) Priorité: **17.06.80 FR 8013413**

(43) Date de publication de la demande: **23.12.81**
**Bulletin 81/51**

(84) Etats contractants désignés: **AT BE CH DE GB IT LI LU NL SE**

(71) Demandeur: **"THOMSON-CSF TELEPHONE"**,
**146 Boulevard de Valmy, F-92707 Colombes Cedex (FR)**

(72) Inventeur: **Bakka, Raymond, THOMSON-CSF**
**SCPI 173 Bld. Haussmann, F-75360 Paris Cedex 08 (FR)**

(74) Mandataire: **Desperrier, Jean-Louis et al,**
**"Thomson-CSF" - SCPI 173, Bld Haussmann,**
**F-75360 Paris Cedex 08 (FR)**

(54) **Interface de passage d'une liaison de transmission numérique en mode MIC à une liaison de transmission numérique en mode Paquets et opérateur de commutation comportant une telle interface.**

(57) L'interface comporte un premier niveau logique (1) qui assure les fonctions classiques propres à la réception d'une jonction de type MIC et un second niveau logique ou circuit d'empaquetage qui comprend quatre mémoires indépendantes au point de vue adressage, une mémoire d'échantillons (20), une mémoire d'en-têtes (30), une mémoire de messages (34) et une mémoire d'informations de connexion (40).

L'invention est utilisée en téléphonie et notamment à l'entrée d'un réseau de commutation de paquets.

## INTERFACE DE PASSAGE D'UNE LIAISON DE TRANSMISSION NUMERIQUE EN MODE "MIC" A UNE LIAISON DE TRANSMISSION NUMERIQUE EN MODE "PAQUETS" ET OPERATEUR DE COMMUTATION COMPORTANT UNE TELLE INTERFACE

L'invention concerne une interface de passage d'une liaison de transmission numérique en mode "MIC" à une liaison de transmission numérique en mode "paquets" : cette interface est utilisée en téléphonie et notamment à l'entrée d'un réseau de commutation de données par paquets.

On appelle transmission numérique tout mode de transmission dans lequel le signal est constitué par une succession d'éléments binaires. Ce type de transmision est utilisé pour la transmission d'informations diverses telles que des signaux vidéo, des données informatiques, des signaux de parole en téléphonie, etc... En téléphonie, on utilise généralement pour transmettre la parole une transmission numérique en mode "MIC".

On appelle mode "MIC" ou "modulation par impulsion et codage" un mode de transmission dans lequel un signal analogique est échantillonné et la grandeur de chaque échantillon par rapport à une référence fixe est quantifiée et convertie par codage en un signal numérique. Sur une liaison de transmission en mode "MIC", les échantillons relatifs à plusieurs conversations sont multiplexés par répartition dans le temps. Les caractéristiques de transmission en mode "MIC" sont définies par les avis G.732 et G.733 des normes internationales données par le CCITT.

On appelle mode "paquets" un mode de transmission utilisé pour transmettre toute donnée numérique ou mise sous forme numérique dans lequel les éléments binaires sont groupés en blocs ou paquets et on associe à chaque bloc des signaux de commande et éventuellement de protection contre les erreurs. Le format de paquet définit la taille et le contenu des diverses zones qui constituent le paquet.

Une interface de passage d'une liaison de transmission en mode "MIC" à une liaison de transmission en mode "paquets" comporte un premier niveau logique qui assure les fonctions classiques propres à la réception d'une liaison numérique telles que la récupération du rythme d'horloge et de la donnée, la recherche et le suivi de la synchronisation et la mémorisation des échantillons.

Cette interface comporte un second niveau logique ou circuit d'empaquetage qui peut être réalisé, selon une conception classique, à l'aide d'une mémoire de parole entrante et d'une mémoire d'adresse associée à la mémoire de parole.

L'invention propose un circuit d'empaquetage de type synchrone, c'est-à-dire dans lequel il y a une relation directe entre l'horloge et la formation des paquets de parole. Cette solution est extrêmement économique puisqu'elle permet d'avoir une structure comportant quatre mémoires indépendantes commandées par un microprocesseur via une logique de commande, ce qui permet d'utiliser une capacité mémoire très réduite tout en ne limitant pas la vitesse de fonctionnement.

Cette structure offre donc de nombreux avantages au point de vue encombrement, coût et délai de transmission.

Selon une caractéristique de l'invention, l'interface de passage d'une liaison de transmission numérique en mode "MIC" à une liaison de transmission numérique en mode "paquets" comporte d'une part un premier niveau logique qui assure les fonctions classiques propres à la réception d'une liaison de transmission numérique en mode "MIC" et qui fournit les données octet par octet à un rythme F0 avec pour chacun d'eux son identité issue d'un compteur, et d'autre part un second niveau logique ou circuit d'empaquetage qui comprend :

- des premiers moyens de mémorisation des échantillons reliés au premier niveau logique ;

- des deuxièmes moyens de mémorisation des en-têtes reliés à un calculateur et à des sorties du compteur du premier niveau logique ;

- des troisièmes moyens de mémorisation des messages reliés au calculateur ;

- des quatrièmes moyens de mémorisation des informations de connexion reliés au calculateur ;

- un circuit logique de commande dont les entrées sont reliées aux sorties des quatrièmes moyens et dont les sorties sont reliées aux premiers, aux deuxièmes et aux troisièmes moyens,

- et un circuit d'émission dont les entrées sont reliées d'une part aux sorties des premiers, deuxièmes et troisièmes moyens, d'autre part au circuit de commande et dont la sortie est reliée à la ligne de transmission numérique en mode paquets.

Selon une autre caractéristique de l'invention, chaque sorte de moyens de mémorisation est constituée par une mémoire et un circuit logique d'adressage associé, les quatre mémoires étant indépendantes en ce qui concerne l'adressage.

Selon une autre caractéristique de l'invention, la mémoire d'échantillons est adressée aussi bien en écriture qu'en lecture par des signaux issus de la base de temps locale du premier niveau logique de l'interface.

D'autres caractéristiques de la présente invention apparaîtront plus clairement à la lecture de la description suivante d'exemples de réalisation, ladite description étant faite en relation avec les dessins ci-annexés dans lesquels :

- la figure 1 représente de façon succincte un exemple de réalisation de l'interface de conception classique ;

- la figure 2 représente le diagramme des temps relatif au fonctionnement du circuit représenté à la figure 1 ;

- la figure 3 représente un exemple de réalisation du circuit d'empaquetage, conforme à l'invention ;

- la figure 4 représente de façon détaillée, le circuit logique de commande du circuit d'empaquetage représente à la figure 3 ;

- les figures 5a et 5b représentent des diagrammes des temps relatifs au fonctionnement du circuit représenté à la figure 3.

Avant de décrire ces exemples de réalisation, on précise les caractéristiques du mode de transmission numérique et le format des paquets qui correspondent à ces exemples.

Le mode de transmission numérique utilisé est le mode "MIC" défini par l'avis G.732 du CCITT, dans lequel une trame "MIC" comprend 32 voies (ou intervalles de temps) qui contiennent chacune un échantillon de huit élément binaires (ou eb) relatif à une conversation sauf pour la première voie (ou IT0) réservée aux informations de synchronisation et la dix-septième (ou IT16) qui contient des informations de signalisation. La fréquence de transmission est de $2,048.10^6$ eb/s.

Quant au mode "paquets", dans les exemples qui seront décrits ci-après chaque paquet est autodirigé, c'est-à-dire qu'il comporte une première zone qui contient un en-tête autodirecteur comportant, dans l'ordre de traversée des opérateurs dans le réseau, la succession des adresses de portes de sortie à utiliser à raison d'une adresse par opérateur. Le nombre d'éléments binaires de l'en-tête est égal au nombre maximal d'opérateurs traversés dans le réseau multiplié par le nombre d'éléments binaires nécessaires pour coder l'adresse d'une porte de sortie, dans ces exemples l'en-tête contient douze octets au plus. Une seconde zone contient les données, dans ces exemples elle contient quatre octets, c'est-à-dire trente-deux éléments binaires.

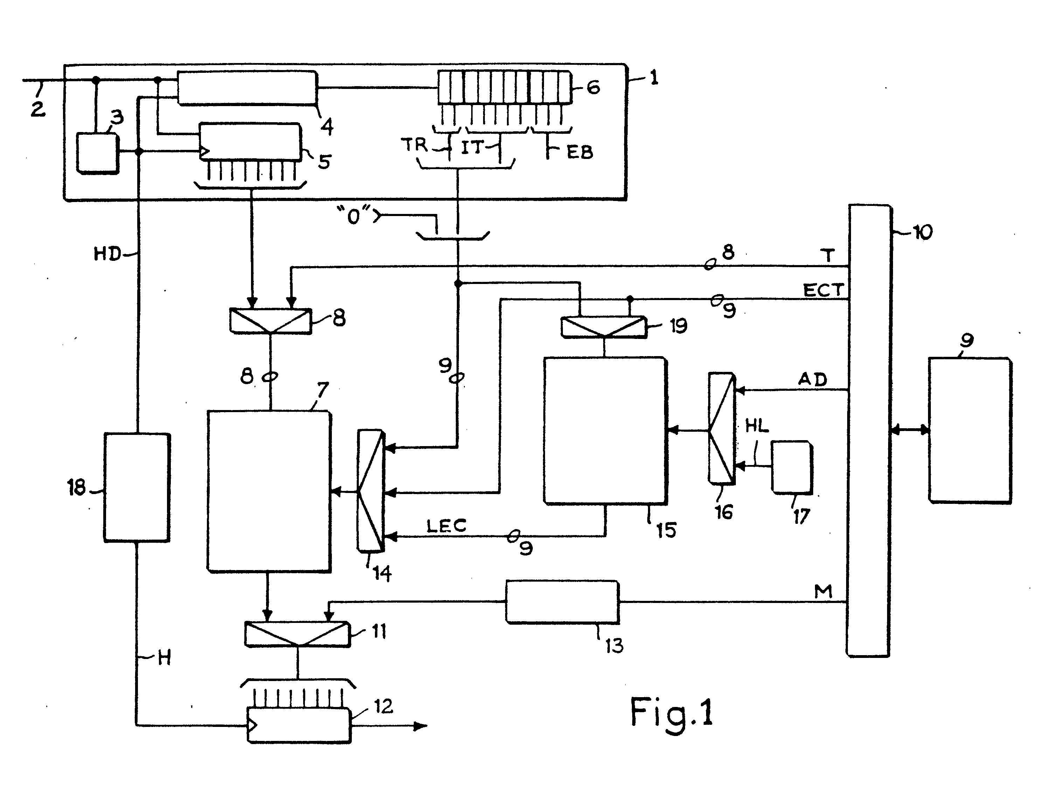

L'interface de conception classique, représentée à la figure 1, comporte un premier niveau logique 1 qui assure les fonctions propres à la réception d'une jonction "MIC" 2.

Ce premier niveau logique comporte notamment un circuit 3 de reconstitution de l'horloge distante qui fournit un signal HD de fréquence F (2 MHz dans notre exemple, un circuit de réception et de synchronisation 4, un registre 5 série-parallèle qui reçoit la jonction et dont l'entrée d'horloge reçoit le signal HD, et, un compteur 6, à x+8 éléments binaires, activé par un signal issu du circuit 4. Ce compteur 6 donne l'identité de l'octet présent à la sortie du registre, c'est-à-dire le numéro de la trame à laquelle il appartient sur x éléments binaires TR, x étant le nombre entier immédiatement supérieur ou égal au logarithme en base 2 du nombre m maximal d'octets de données que peut comporter un paquet, (dans cet exemple m est égal à 4 et x à 2), et le numéro de la voie à laquelle il appartient sur cinq éléments binaires IT. Le compteur 6 fournit également un numéro d'élément binaire sur trois éléments binaires EB.

Le second niveau logique comporte une mémoire 7 de parole et d'en-têtes de 512 mots de 8 eb, soit 32x4 octets de parole et 32x12 octets d'en-têtes, dont les entrées sont reliées via un multiplexeur 8 d'une part aux sorties du registre 5 et d'autre part à un calculateur 9, par l'intermédiaire d'une interface 10, duquel elle reçoit un signal T sur 8 fils en parallèles.

Ce calculateur 9 est généralement le calculateur du niveau supérieur de l'opérateur de commutation d'entrée de la jonction MIC concernée dans le réseau.

Les sorties de la mémoire 7 sont reliées via un multiplexeur 11 aux entrées d'un registre 12 parallèle-série qui reçoit comme signal d'horloge un signal H, obtenu à partir du signal HD en multipliant sa fréquence par quatre à l'aide du circuit 18, et dont la sortie fournit les informations en mode "paquets".

Ce registre 12 reçoit également via le multiplexeur 11 des paquets unitaires de messages M provenant du calculateur 9, via l'interface 10 et une mémoire 13 de type FIFO "premier entré, premier sorti". Ces paquets de messages sont échangés entre les opérateurs du réseau de commutation pour établir une communication.

Les entrées d'adressage de la mémoire 7 reçoivent via un multiplexeur soit les signaux TR et IT issus du compteur 6, soit un signal ECT issu du calculateur 9, soit un signal LEC issu d'une mémoire 15 d'adresse de type à lecture et écriture adressée, via un multiplexeur 16, en écriture par le calculateur 9 qui lui fournit le signal AD et en lecture par le signal HL issu de l'horloge locale 17. La mémoire 15 comporte 512 mots de 9 eb pour adresser la mémoire 7 et elle reçoit en entrée via un multiplexeur 19 soit les signaux ECT, soit les signaux "0", TR, IT.

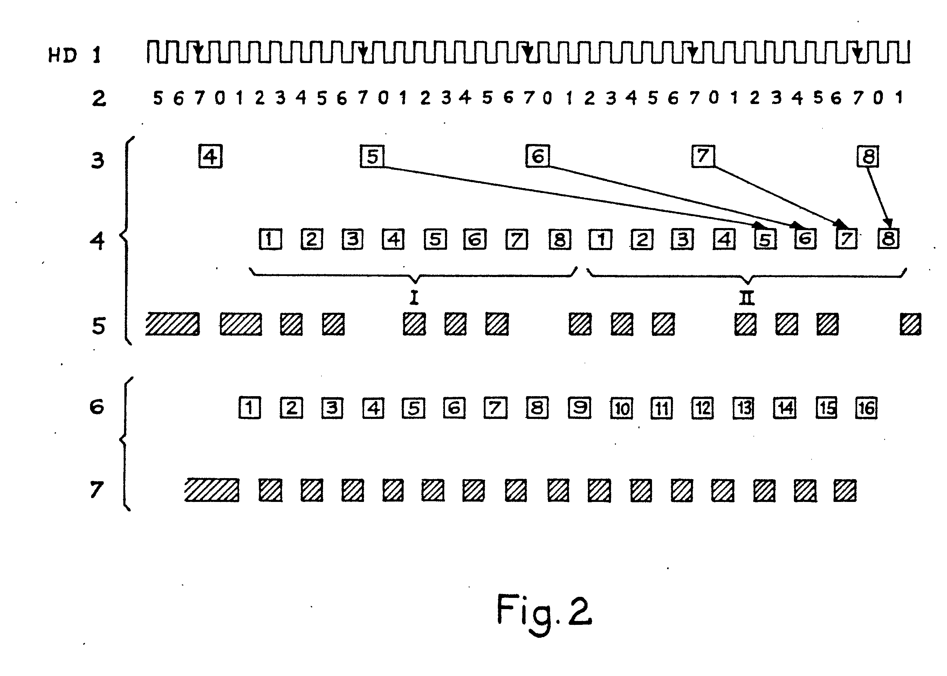

Le fonctionnement de ce premier exemple est expliqué à l'aide de la figure 2 de façon succincte, car il n'est pas l'objet de l'invention comm on l'a expliqué plus haut.

La première ligne de la figure 2 représente l'allure du signal d'horloge HD à 2,048 Meb/s, c'est-à-dire qu'une période de 488 ns correspond à un élément binaire.

La seconde ligne donne la valeur décimale du contenu des signaux EB de numéro d'élément binaire du compteur 6.

Les trois lignes suivantes concernent la mémoire 7 de parole et d'entête. La ligne 3 correspond à l'écriture des octets dans la mémoire 7. Chaque fois qu'un octet est présent en entier à la sortie du registre 5, c'est-à-dire chaque fois que les éléments binaires EB du compteur sont à 7 ou $111_2$, il est écrit à l'adresse donnée par son identité (numéro de trame et numéro de voies) précédée de l'élément binaire "0" car c'est la première moitié de la mémoire 7 qui est réservée aux octets de parole.

La ligne 4 correspond à la lecture de la mémoire 7, c'est-à-dire à l'émission des paquets dont les adresses sont données par le signaux LEC. Le premier groupe I de huit octets correspond à l'en-tête et le second II à la parole.

Un paquet étant lu quatre frois plus rapidement qu'il n'est écrit, on déclenche l'émission d'un paquet $\frac{64+64}{4} = 32$ périodes du signal d'horloge HD avant l'écriture dans la mémoire 7 de parole et d'en-tête du dernier octet de ce paquet. Cette façon de procéder est celle qui retarde le paquet du minimum de temps.

A la ligne 5 sont hachurés les temps restant disponibles pour l'accès, en écriture ou en lecture, du calculateur 9 à la mémoire 7. Pendant ces temps disponibles, le calculateur 9 écrit dans la mémoire 7 les en-têtes, donnés par les signaux T, aux adresses données par les signaux ECT.

Les lignes 6 et 7 de la figure 2 concernent la mémoire 15 d'adresse. La ligne 6 correspond à la lecture de la mémoire 15 qui fournit les adresses LEC à la mémoire 7 ; la lecture de l'adresse précède bien entendu la lecture dans la mémoire 7, comme le montrent les lignes 4 et 6. La lecture de la mémoire 15 est cyclique et l'adresse de lecture progresse au rythme de l'horloge locale HL synchronisée avec l'horloge distante.

A la ligne 7 sont hachurés les temps restant disponibles pour l'accès, en écriture ou en lecture, du calculateur 9. Pendant ces temps disponibles, le calculateur 9 gère, via le multiplexeur 19 et les entrées des signaux AD d'adressage, l'écriture des adresses des octets d'en-tête ECT et de parole TR+IT dans leur ordre d'émission.

L'émission des paquets de parole est réalisée, via le registre 12 en série au rythme de 8 Meb/s du signal H et cette émission s'entrelace avec l'envoi de paquets unitaires de messages provenant de la mémoire 13.

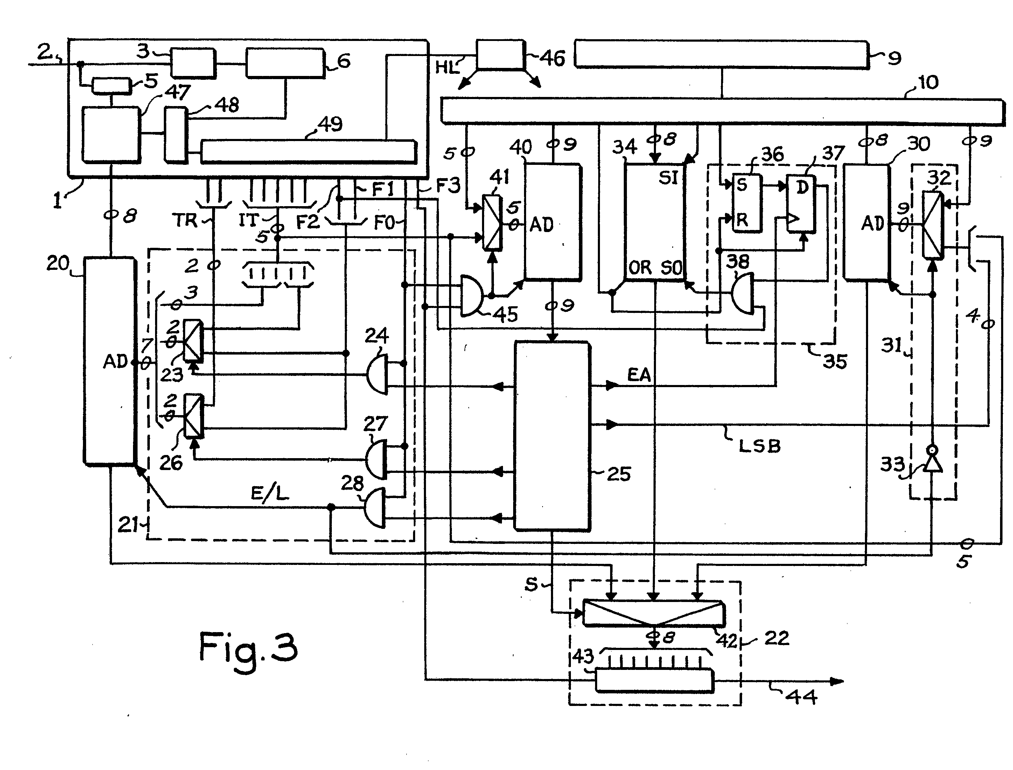

Une interface, conforme à l'invention, avec ses quatre mémoires indépendantes est représentée à la figure 3. Les éléments identiques portent les mêmes références dans les figures 1 et 3 et on a les mêmes hypothèses que celles prises dans la réalisation précédente.

Cette seconde réalisation comporte un premier niveau logique 1 de réception qui comporte, notamment, un circuit 3 de reconstitution de l'horloge distante, un registre série-parallèle 5 dont l'entrée est reliée à la liaison 2, une mémoire 47 dont les entrées sont reliées aux sorties du registre 5, une base de temps 6 distante, une base de temps 49 locale dont une entrée est reliée à l'horloge locale 46 qui fournit un signal HL, et un circuit logique 48 d'adressage de la mémoire 47 dont les entrées correspondant à l'écriture sont reliées à la base de temps distante 6, dont les entrées correspondant à la lecture sont reliées aux entrées d'adressage de la mémoire 47.

Le circuit 1 n'est pas décrit plus amplement, car il n'est pas l'objet du brevet.

Le circuit 1 fournit les informations octet par octet au rythme F0 (256 KHz dans notre exemple) élaboré par la base de temps 49 à partir du signal HL. Le circuit 12 fournit, en même temps que chaque octet, son identité, c'est-à-dire son numéro de trame TR sur deux éléments binaires et son numéro de voie IT sur cinq éléments binaires, IT et TR étant issus de la base de temps 49. La base de temps 49 fournit, enfin, un signal F1 de fréquence 8F0, un signal F2 de fréquence 16F0 et un signal F3 de fréquence 128.F0.

Le second niveau logique comporte tout d'abord des moyens de mémorisation des échantillons qui comprennent d'une part une mémoire vive 20 de 4n mots de 8 éléments binaires, n étant le nombre d'intervalles de temps par trame qui est égal à 32 dans notre exemple, et un circuit logique d'adressage 21. Les entrées de la mémoire 20, qui est appelée dans la suite mémoire d'échantillons, sont reliées aux sorties de la mémoire 47, et ces sorties sont reliées à un circuit d'émission 22.

Les sept entrées AD d'adressage de la mémoire 20 sont reliées aux sept sorties du circuit logique d'adressage 21. Les trois premières entrées d'adressage de la mémoire 20 sont reliées directement aux trois sorties de poids le plus fort parmi les cinq sorties de la base de temps 49 qui donnent l'identité de voie IT.

Les deux entrées suivantes sont reliées aux sorties d'un multiplexeur 23 dont deux entrées sont reliées aux deux sorties de poids le plus faible parmi les cinq sorties de la base de temps 49 qui donnent l'identité de voie IT, les deux autres entrées du multiplexeur 23 étant reliées à deux sorties du niveau logique 1 qui fournissent respectivement le signal d'horloge F1 de fréquence 8F0 et le signal d'horloge F2 de fréquence 16F0 ; l'entrée de commande du multiplexeur 23 est reliée à la sortie d'une porte logique "ET" 24 dont l'une des entrées est reliée à la sortie du niveau 1 qui fournit le signal d'horloge de fréquence F0 et dont l'autre entrée est reliée à la sortie d'un circuit logique de commande 25 qui fournit un signal d'indication de connexion en bande LB.

Les dernières entrées d'adressage AD de la mémoire 20 sont reliées aux sorties d'un multiplexeur 26 dont deux des entrées sont reliées aux sorties de la base de temps 49 qui donnent l'identité de trame TR dont les deux autres entrées sont reliées aux sorties du niveau 1 qui fournissent respectivement les signaux d'horloge F1 et F2, et dont l'entrée de commande est reliée à la sortie d'une porte logique "ET" 27 dont l'une des entrées est reliée à la sortie du niveau 1 qui fournit le signal de fréquence F0 et dont l'autre entrée est reliée à une sortie du circuit logique de commande 25 qui fournit un signal d'indication de connexion en bande de base BB.

L'entrée de commande de lecture-écriture de la mémoire 20 reçoit un signal E/L issu d'une porte logique "ET" 28 dont l'une des entrées reçoit le signal d'horloge de fréquence F0 issu du niveau 1 et dont l'autre entrée reçoit un signal de validation VAL issu du circuit logique de commande 25.

Le circuit d'empaquetage conforme à l'invention comporte, également, des moyens de mémorisation des en-têtes, qui comprennent une mémoire vive 30 capable de contenir 12n mots de 8 éléments binaires, 12n étant égal à 384 dans notre exemple puisque n est égal à 32, et un circuit logique d'adressage 31 constitué par un multiplexeur 32 et un inverseur 33.

Les huit entrées de la mémoire d'en-tête 30 sont reliées au calculateur 9 via l'interface 10, et ses sorties sont reliées au circuit d'émission 22. Les neuf entrées AD d'adressage de la mémoire 30 sont reliées aux sorties du multiplexeur 32 dont une première partie des entrées correspondant à l'écriture est reliée au calculateur 9 via l'interface 10, et dont une seconde partie des entrées comporte quatre entrées reliées au circuit logique de commande 25 qui fournit un signal d'adresse LSB, les cinq autres entrées de la seconde partie étant reliées aux cinq sorties du niveau 1 qui fournissent l'identité de voies IT. L'entrée de commande du multiplexeur 32 et l'entrée de commande de lecture-écriture de la mémoire 30 sont reliées à la sortie de l'inverseur 33 dont l'entrée est reliée à la sortie de la porte logique "ET" 28 qui fournit le signal E/L.

Le circuit d'empaquetage comporte, en outre, des moyens de mémorisation des messages qui comprennent une mémoire 34 de type "premier entré, premier sorti" qui comporte 48 mots de 8 éléments binaire, de telle sorte qu'elle puisse se vider totalement en une seule fois, et un circuit logique de décalage de sortie 35 qui comporte deux bascules 36 et 37, et une porte logique "ET" 38.

Les huit entrées de la mémoire de message 34 sont reliées au calculateur 9 via l'interface 10, et ses sorties sont reliées au circuit d'émission 22. L'entrée SI de décalage d'entrée est reliée au calculateur 9 ainsi que la sortie OR d'indication d'état de la sortie.

La bascule 36 est une bascule de type RS dont l'entrée S est reliée au calculateur 9 via l'interface 10 de laquelle elle reçoit un signal d'indication de fin d'écriture, et son entrée R est reliée à la sortie Q de la bascule 36, son entrée d'horloge est reliée au circuit logique de commande 25 qui fournit un signal d'autorisation d'émission EA, et son entrée de remise à zéro est reliée à la sortie OR de la mémoire 34.

L'entrée de décalage de la sortie SO de la mémoire 34 est reliée à la sortie de la porte "ET" 38 dont l'une des entrées est reliée à la sortie Q de la bascule 37 et dont l'autre entrée est reliée à la sortie du niveau 1 qui fournit le signal d'horloge de fréquence F2.

Le circuit d'empaquetage comporte enfin des moyens de mémorisation des informations de connexion qui comprennent une mémoire vive 40 de n mots, n est égal à 32 dans notre exemple de neuf éléments binaires, et un circuit logique d'adressage constitué par un multiplexeur 41 et une porte logique "ET" 45.

Les neuf entrées de la mémoire de connexion 40 sont reliées au calculateur 9 via l'interface 10, et les neuf sorties sont reliées au circuit logique de commande 25. Les entrées AD d'adressage de la mémoire 40 sont reliées aux cinq sorties du multiplexeur 41 dont une première partie des entrées correspondant à l'écriture est reliée au calculateur 9, dont une seconde partie des entrées correspondant à la lecture est reliée aux cinq sorties du niveau 1 qui correspondent à l'identité de voie IT. L'entrée de commande du multiplexeur 41 et l'entrée de commande de lecture-écriture de la mémoire 40 sont reliées à la sortie de la porte "ET" 45 dont l'une des entrées est reliée à la sortie du niveau 1 qui fournit le signal F3 et dont l'autre sortie est reliée à la sortie du niveau 1 qui fournit le signal F0.

Le circuit 22 d'émission est constitué par un multiplexeur 42 et un convertisseur parallèle-série 43. Le multiplexeur 42 comporte trois groupes de huit entrées chacun, les entrées du premier groupe étant reliées aux sorties de la mémoire d'échantillon 20, les entrées du second groupe étant reliées aux sorties de la mémoire d'en-tête 30 et les entrées du troisième groupe étant reliées aux sorties de la mémoire de message 34. L'entrée de commande du multiplexeur 42 est reliée à une sortie du circuit logique de commande 25 qui lui fournit un signal de sélection.

Les huit sorties du multiplexeur 42 sont reliées aux huit entrées parallèles du convertisseur 43, ce convertisseur 43 pouvant être par exemple comme on l'a représenté à la figure 3 un registre parallèle-série analogue au registre 12 représenté à la figure 1, la sortie de ce registre étant reliée à la ligne de transmission numérique en mode paquets 44 et son entrée d'horloge étant reliée à la sortie de la base de temps locale 49 qui fournit le signal F3.

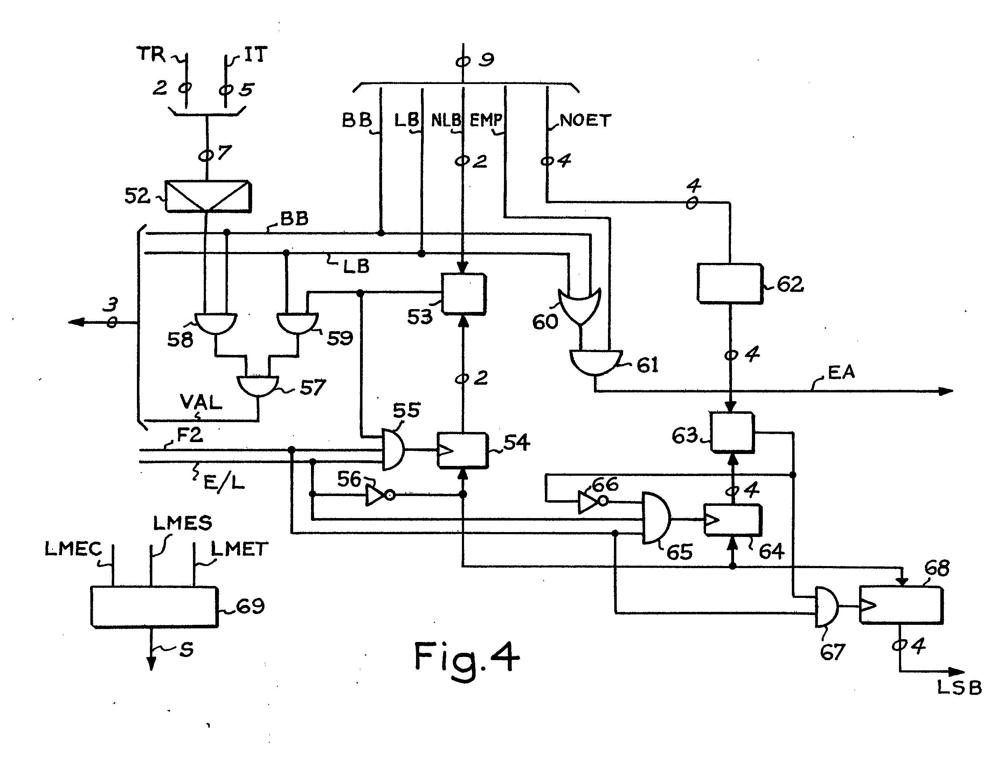

Pour simplifier la figure 3, on a représenté le circuit logique de commande 25 de façon détaillée à la figure 4.

Les sorties de la mémoire de connexion 40 fournissent cinq sortes de signaux. Une première sortie fournit tout d'abord un élément binaire BB qui indique, lorsqu'il est à "1", qu'il s'agit d'une connexion en bande de base. Ce type de connexion consiste à mettre en paquets les échantillons qui sont relatifs à une même voie, et qui proviennent de N trames successives en respectant l'ordre des trames.

Une deuxième sortie fournit un élément binaire LB qui indique, lorsqu'il est à "1", qu'il s'agit d'une connexion en large bande. Ce type de connexion consiste à mettre en paquets les échantillons relatifs à plusieurs voies successives provenant de la même trame, le nombre de voies pouvant être compris entre 2 et 31 et l'ordre des voies devant être respecté.

Deux autres sorties fournissent sur deux éléments binaires un signal NLB qui indique le nombre d'échantillons de parole du paquet en connexion en large bande, ce nombre étant compris entre 1 et 4. Une cinquième sortie de la mémoire de connexion 40 fournit un élément binaire EMP qui indique que l'émission de message est possible.

Les quatre dernières sorties de la mémoire de connexion fournissent sur quatre éléments binaires un signal NOET qui donne le nombre d'octets de l'en-tête, ce nombre étant compris entre 1 et 12.

Les différents signaux fournis par la mémoire de connexion étant définis, on décrit les différents éléments qui composent le circuit logique de commande 25.

Le circuit 25 comporte tout d'abord un décodeur 52 dont les sept entrées sont reliées aux sept sorties du niveau 1 qui fournissent sur deux éléments binaires l'identité de trame TR et sur cinq éléments binaires l'identité de voie IT qui fournit sur une sortie un signal correspondant au décodage des temps d'empaquetage, la signification de ce signal est expliquée dans la suite.

Le circuit 25 comporte d'autre part un comparateur 53 dont deux entrées sont reliées aux deux sorties de la mémoire 40 qui fournissent le signal NLB, et dont les deux autres entrées sont reliées aux sorties d'un compteur 54 à deux éléments binaires. L'entrée d'horloge du compteur 54 est reliée à la sortie d'une porte logique "ET" 55 à trois entrées qui sont reliées respectivement à la sortie de la porte 28 du circuit logique d'adressage 21 qui fournit E/L, à la sortie du niveau 1 qui fournit un signal d'horloge de fréquence F2, et à la sortie du comparateur 53. L'entrée de remise à zéro du compteur 54 est reliée à la sortie d'un inverseur 56 dont l'entrée reçoit le signal E/L issu de la porte 28.

Le circuit logique 25 fournit au circuit logique d'adressage 21 les signaux BB et LB issus de la mémoire 40 et un signal de validation de lecture VAL qui est issu d'une porte logique "ET" 57 dont l'une des entrées est reliée à la sortie d'une porte logique "ET" 58, et dont l'autre entrée est reliée à la sortie d'une porte logique "ET" 59. La porte logique "ET" 58 a l'une de ses entrées reliée à la sortie du décodeur 52 et son autre entrée reliée à la sortie de la mémoire 40 qui fournit le signal BB. La porte logique "ET" 59 a l'une de ses entrées reliée à la sortie de la mémoire 40 qui fournit le signal LB et a son autre entrée reliée à la sortie du comparateur 53.

Le circuit logique de commande 25 comporte également une porte logique "OU" 60 dont les deux entrées sont reliées respectivement aux sorties de la mémoire 40 qui fournissent les signaux LB et BB. La sortie de la porte "OU" 60 est reliée à l'une des entrées de la porte logique "ET" 61 dont l'autre entrée est reliée à la sortie de la mémoire 40 qui fournit le signal EMP, et dont la sortie est reliée à l'entrée d'horloge de la bascule 37 du circuit 35, à laquelle elle fournit le signal EA d'autorisation d'émission.

Le circuit 25 comporte également un circuit logique 62 dont les entrées sont reliées aux quatre sorties de la mémoire 40 qui fournissent le signal NOET, et dont les quatre sorties fournissent sur quatre éléments binaires le complément à douze du nombre présent à l'entrée. Les quatre sorties du circuit 62 sont reliées à quatre des entrées d'un circuit comparateur 63, dont les quatre autres entrées sont reliées aux sorties d'un compteur 64 à quatre éléments binaires. L'entrée de remise à zéro du compteur 64 est reliée à la sortie de l'inverseur 56 et son entrée d'horloge est reliée à la sortie d'une porte logique "ET" 65 à trois entrées dont l'une des entrées reçoit le signal E/L issu de la porte 28, dont une autre entrée est reliée à la sortie du niveau 1 qui fournit le signal d'horloge de fréquence F2 et dont la dernière entrée est reliée à la sortie d'un inverseur 66 dont l'entrée est reliée à la sortie du comparateur 63.

La sortie du comparateur 63 est également reliée à l'une des entrées d'une porte logique "ET" 67 dont l'autre entrée est reliée à la sortie du niveau 1 qui fournit le signal d'horloge de fréquence F2 et dont la sortie est reliée à l'entrée d'horloge d'un compteur d'adresse 68 à quatre éléments binaires dont l'entrée de remise à zéro est reliée à la sortie de l'inverseur 56 et dont les quatre sorties sont reliées à quatre des entrées du multiplexeur 32 auquel il fournit les signaux LSB.

Le circuit logique de commande 25 comporte enfin un circuit de transcodage 69 à trois entrées et une sortie, la première entrée étant reliée à la sortie de la porte logique 28 qui fournit le signal E/L de commande de lecture-écriture de la mémoire d'échantillons 20 (LMEC), la deuxième entrée étant reliée à la sortie de la porte logique "ET" 38 qui est reliée à l'entrée SO de décalage de sortie de la mémoire de message, et qui fournit un signal de lecture LMES, la troisième entrée étant reliée à la sortie de l'inverseur 33 qui est relié à l'entrée de commande de lecture-écriture de la mémoire d'en-tête 30 et qui fournit un signal de lecture LMET.

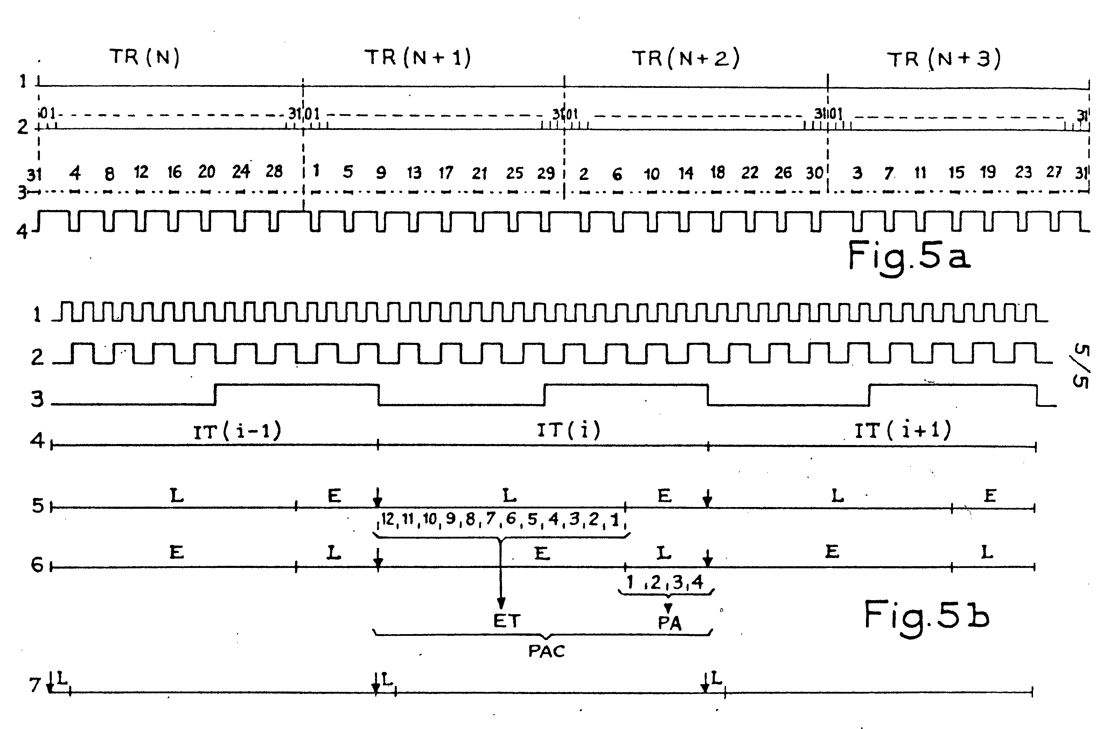

Le fonctionnement du circuit d'empaquetage, conforme à l'invention et représenté aux figures 3 et 4, est décrit ci-dessous en relation avec les figures 5a et 5b.

La figure 5a se rapporte, plus particulièrement, aux moyens de mémorisation et d'émission d'échantillon dans le cas d'une connexion en bande de base.

La mémoire d'échantillons 20 comporte 128 mots de huit éléments binaires, ce qui lui permet de contenir entièrement quatre trames successives comportant chacune trente-deux voies. Il est nécessaire de mémoriser quatre trames successives puisqu'un paquet contient quatre octets de paroles.

A la figure 5a, on a schématisé à la ligne 1 le signal d'horloge trame et à la ligne 2 le signal d'horloge voie de fréquence F0.

Un paquet de parole correspondant à une voie donnée IT(i) est disponible toutes les quatre trames, c'est pourquoi pendant le temps correspondant à une trame donnée TRj, au plus huit paquets de parole sont disponibles.

Par exemple (voir figure 5a ligne 3), si pendant la trame TR (N) les paquets de parole correspondant aux communications des voies 4, 8, 12, 16, 20, 24 et 28 sont disponibles en sortie de la mémoire 20, pendant la trame TR (N+1) sont disponibles les paquets de parole correspondant aux communications des voies 1, 5, 9, 13, 17, 21, 25 et 29 pendant la trame TR (N+2) sont disponibles ceux correspondant aux communications de voies 2, 6, 10, 14, 18, 22, 26 et 30 pendant la trame TR (N+3) sont disponibles ceux correspondant auxcommunications des voies 3, 7, 11, 15, 19, 23, 27 et 31 et ainsi de suite.

On voit donc, comme cela est schématisé à la figure 5a ligne 4, qu'il y a un paquet de parole disponible au plus tous les quatre temps de voie, les autres temps restant disponibles pour l'émission de messages par exemple.

En connexion large bande, les informations sont découpées en paquet d'un maximum de quatre échantillons, les moments d'empaquetage étant indépendants du numéro de trame et les paquets pour une même connexion étant formés à chaque trame.

Les principes de formation de la partie des paquets concernant la parole étant donnés, on décrit de façon détaillée la formation des paquets entiers à l'aide des diagrammes des temps de la figure 5b, indépendamment du type de connexion.

A la ligne 1, on a représenté le signal d'horloge de fréquence F2 égale à 16F0, à la ligne 2 celui de fréquence F4 égale à 8F0 et à la ligne 3 celui de fréquence F0, F0 étant dans notre exemple à 256 KHz. A la ligne 4, on a schématisé la succession des voies IT (i-1), IT (i), IT (i+1).

La ligne 5 concerne le fonctionnement des moyens de mémorisation d'en-têtes, qui fournissent l'en-tête ET pour chaque paquet de paroles PA ; on y a représenté le signal LMET de commande de lecture-écriture de la mémoire 30.

La ligne 6 concerne le fonctionnement des moyens de mémorisation d'échantillons, qui fournissent les paquets de parole PA ; on y a représenté le signal LMEC de commande de lecture-écriture de la mémoire 20.

La ligne 7 concerne le fonctionnement des moyens de mémorisation d'informations de connexion ; on y a représenté le signal LMCX de commande de lecture de la mémoire 34.

Le signal de base des signaux LMET et LMEC, est le signal d'horloge de fréquence F0 représenté à la ligne 3.

Le signal effectif, désigné par E/L sur la figure 3 et qui est aussi le signal LMEC (ligne 6, figure 5b), comporte un premier temps de disponibilité en écriture (E) égal aux trois-quarts de la période 1/F0 et un second temps de disponibilité en lecture (L) égal au quart de 1/F0, ce dernier temps étant suffisant pour lire quatre octets.

Quel que soit le mode de connexion, les échantillons sont écrits dans la mémoire 20 au rythme F0 à l'adresse fournie par les sorties du niveau 1 qui donnent l'identité de trame TR et de voie IT, via le circuit logique d'adressage 21.

Le signal LMET (ligne 5, figure 5b) est le signal inverse du signal LMEC, le premier temps de disponibilité en écriture (E) étant suffisant pour lire jusqu'à douze octets et le second temps étant disponible pour l'accès du calculateur 9.

Le signal MCX issu de la porte "ET" 45 est schématisé à la ligne 7 ; il comporte pour chaque périoide 1/F0, un premier temps de lecture égal à 1/F3 et un second temps disponible pour l'accès du calculateur 9, de telle sorte que les informations de connexion soient lues et traitées par le circuit logique de commande 25 avant le début de lecture d'un en-tête ET dans la mémoire 30 ou avant le début de lecture d'un message dans la mémoire 20.

On décrit, maintenant, la formation d'un paquet comportant un en-tête ET de douze octets au plus et un paquet de parole PA de quatre octets.

Pour chacune des trente-deux connexions possibles, la mémoire de connexion contient les indications nécessaires à l'établissement de la connexion. La mémoire 40 est donc écrite sous le contrôle du compteur de voie IT.

Au moment de l'établissement d'une connexion, la logique de commande 25 dispose donc des informations lues dans la mémoire 40 et élabore les signaux de commande nécessaires à la formation du paquet et à son émission.

On commence par lire (signal LMET, ligne 5, figure 5b) les octets d'en-tête ET dans la mémoire 30, le nombre d'octets étant égal au nombre fourni par les signaux NOET issus de la mémoire de connexion 40. La lecture de la mémoire 30 se fait à partir de l'adresse "0" pointée par le compteur de voie IT. Les quatre éléments binaires LSB fournis par la logique 25 constituent les poids faibles de l'adresse de lecture. La logique 25 ne fournit le signal LSB qu'après un temps correspondant au complément à douze (circuit 2) du nombre donné par NOET de telle sorte que les octets d'en-tête et de parole se succèdent sans interruption. La lecture s'achève lorsque le compteur 68 est remis à zéro par le signal issu de l'inverseur 56, les signaux donnés par LSB étant alors identiques.

Après le dernier octet d'en-tête, on lit immédiatement le paquet de parole PA dans la mémoire 20.

La lecture n'est autorisée que lorsque le signal VAL issu du circuit 25 le permet.

Lorsqu'il s'agit d'une connexion en bande de base, l'autorisation parvient du circuit 52, qui effectue le décodage correspondant au principe énoncé ci-dessus en relation avec la figure 5a. Les quatre octets sont, alors, lus dans chacune des quatre trames à l'adresse pointée par le compteur de voie IT, et par les signaux d'horloge de fréquence F1 et F2.

Lorsqu'il s'agit d'une connexion en large bande, l'autorisation parvient du comparateur 53, qui donne une autorisation pendant le temps nécessaire à la lecture d'un nombre d'octets égal à NLB.

Les quatre octets sont, alors, lus dans la mémoire 20 à des adresses de voies successives décroissantes dans la même trame à partir du temps de voie choisi pour la connexion.

Dans les deux types de connexion, on obtient un paquet de parole PA comportant au plus quatre octets.

Pendant les temps restant disponibles, (voir figure 5a, ligne 4) on peut émettre les messages contenus dans la mémoire 34.

Cette mémoire 34 contient les messages dans leur totalité, c'est-à-dire en-tête plus données, et on peut émettre (signal LMES) un message de seize octets au maximum, quand le circuit logique 25 en donne l'autorisation (signal EA) et lorsque le calculateur indique la fin d'écriture dans la mémoire 34 (circuit d'adressage 35).

## REVENDICATIONS

1. Interface de passage d'une liaison de transmssion numérique en mode "MIC" (2) à une liaison de transmission numérique en mode "paquets" (44) qui comporte un premier niveau logique (1) qui assure les fonctions classiques propres à la réception d'une liaison de transmission numérique en mode "MIC" et qui fournit les données octet par octet à un rythme F0, avec pour chacun d'eux son identité (voie (IT) et trame (TR) issue d'un compteur dont l'entrée d'horloge reçoit le signal d'horloge distante de fréquence F, caractérisée en ce qu'elle comporte un second niveau logique ou circuit d'empaquetage qui comprend :

- des premiers moyens (20) de mémorisation des échantillons reliés au premier niveau logique (1) ;

- des deuxièmes moyens (30) de mémorisation des en-têtes reliés à un calculateur (9) et à des sorties du compteur du premier niveau logique ;

- des troisièmes moyens (34) de mémorisation des messages reliés au calculateur (9) ;

- des quatrièmes moyens (40) de mémorisation des informations de connexion reliés au calculateur (9) ;

- un circuit logique de commande (25) dont les entrées sont reliées aux sorties des quatrièmes moyens (40) et dont les sorties sont reliées aux premiers (20), aux deuxièmes (30) et aux troisièmes (34) moyens et

- un circuit d'émission (22) dont les entrées sont reliées d'une part aux sorties des premiers (20), deuxièmes (30) et troisièmes (34) moyens, d'autre part au circuit de commande (25) et dont la sortie est reliée à la ligne de transmission numérique en mode paquets (44) ; les premiers, deuxièmes, troisièmes et quatrièmes moyens étant indépendants les uns des autres, en ce qui concerne l'adressage.

2. Interface de passage d'une liaison de transmission numérique en mode "MIC" comportant 32 intervalles de temps par trame, à une liaison de transmission numérique en mode "paquets" (44) selon la revendication 1, caractérisée en ce que les premiers moyens de mémorisation des échantillons comprennent :

- une mémoire vive (20) de 128 mots de huit éléments binaires dont les entrées sont reliées aux sorties de données du premier niveau logique et dont les sorties sont reliées au circuit d'émission ;

- et un circuit logique d'adressage (21) constitué essentiellement de multiplexeurs (23, 26) dont les sorties sont reliées aux entrées d'adressage de la mémoire d'échantillons et qui lui fournissent comme adresse d'écriture, les sept signaux d'identité (voie et trame) issus du compteur du premier niveau logique et comme adresse de lecture, les cinq signaux d'identité de voie (IT) issus du compteur et deux signaux d'horloge (F1, F2), l'un de fréquence 8F0 et l'autre de fréquence 16F0 lorsqu'il s'agit d'une connexion en bande de base, ou les trois signaux d'identité de voie de poids forts issus du compteur, les deux signaux d'horloge à 8F0 et 16F0 et les deux signaux d'identité de trame (TR) issus du compteur, lorsqu'il s'agit d'une connexion en large bande ; l'adressage étant réalisé uniquement à partir des signaux fournis par le premier niveau logique.

3. Interface de passage d'une liaison de transmission numérique en mode "paquets" (44) selon la revendication 1 ou la revendication 2, caractérisée en ce que les deuxièmes moyens de mémorisation des en-têtes comprennent :

- une mémoire vive (30) de 384 mots de huit éléments binaires dont les entrées sont reliées au calculateur et dont les sorties sont reliées au circuit d'émission ;

- et un circuit logique d'adressage (31) constitué par un multiplexeur (32) à dix-huit entrées et neuf sorties dont une première partie des entrées, correspondant à l'écriture, est reliée au calculateur, dont une seconde partie des entrées, correspondant à la lecture est reliée d'une part aux cinq sorties d'identité de voie (IT) du premier niveau logique (1), d'autre part à quatre sorties d'adresse de lecture (LSB) du circuit de commande, et dont les sorties sont reliées aux entrées d'adressage (AD) de la mémoire d'en-têtes (30).

4. Interface de passage d'une liaison de transmission numérique en mode "MIC" (2) à une liaison de transmission numérique en mode "paquets" (44) selon l'une quelconque des revendications 1 à 3, caractérisée en ce que les troisièmes moyens de mémorisation des messages comprennent :

- une mémoire (34) de type premier entré-premier sorti de 48 mots de huit éléments binaires dont les entrées de données sont reliées au calculateur, dont les sorties de données sont reliées au circuit d'émission, dont l'entrée de décalage d'entrée et la sortie d'indication d'état des sorties sont reliées au calculateur :

- et un circuit logique de décalage (35) de sortie qui comporte premièrement une bascule (36) de type RS dont l'entrée R est reliée au calculateur qui lui fournit un signal de fin d'écriture et dont l'entrée S est reliée à la sortie d'indication d'état des sorties de la mémoire de message, deuxièmement une bascule (37) de type D dont l'entrée D est reliée à la sortie de la bascule de type RS, dont l'entrée d'horloge est reliée au circuit logique de commande et dont l'entrée de remise à zéro est reliée à la sortie d'indication d'état des sorties de la mémoire de messages, et troisièmement une porte logique "ET" (38) dont la première entrée est reliée à la sortie de la bascule de type D, dont la seconde entrée reçoit le signal d'horloge de fréquence 16F0 et dont la sortie est reliée à l'entrée de décalage de sortie de la mémoire de messages (34).

5. Interface de passage d'une liaison de transmission numérique en mode "MIC" (2), comportant 32 intervalles de temps par trame, à une liaison de transmission numérique en mode "paquets" (44) selon l'une quelconque des revendications 1 à 4, caractérisée en ce que les quatrièmes moyens de mémorisation des informations de connexion comprennent :

- une mémoire vive (40) de 32 mots de dix éléments binaires dont les entrées sont reliées au calculateur et dont les sorties sont reliées au circuit logique de commande ;

- et un circuit logique d'adressage (41) constitué par un multiplexeur à dix entrées et cinq sorties dont une première partie des entrées, correspondant à l'écriture, est reliée au calculateur (9), dont une seconde partie des entrées, correspondant à la lecture, est reliée aux cinq sorties d'identité de voie (IT) du premier niveau logique (1), et dont les sorties sont reliées aux entrées d'adressage (AD) de la mémoire des connexions (40).

6. Interface de passage d'une liaison de transmission numérique en mode "paquets" (44) selon l'une quelconque des revendications 1 à 5, caractérisée en ce que le circuit logique (25) de commande, dont les entrées sont reliées aux sorties de la mémoire de connexion, comporte :

- des moyens permettant de commander l'émission des paquets formés d'en-têtes (62 à 68) issus de la mémoire d'en-tête (30) et d'octets (52 à 59) de parole issus de la mémoire d'échantillons (20) ;

- et des moyens (60, 61) permettant de commander entre les émissions de paquets l'émission de messages issus de la mémoire (34).

7. Interface de passage d'une liaison de transmission numérique en mode "MIC" (2) à une liaison de transmission numérique en mode "paquets" (44) selon l'une quelconque des revendications 1 à 6, caractérisée en ce que le circuit d'émission (22) comprend :

- un multiplexeur (42) comportant trois groupes de huit entrées chacun, dont le premier groupe est relié aux sorties des premiers moyens de mémorisation d'échantillons dont le deuxième groupe est relié aux sorties des deuxièmes moyens de mémorisation d'en-têtes et dont le troisième groupe est relié aux sorties des troisièmes moyens de mémorisation de messages, et dont l'entrée de commande est reliée au circuit logique de commande ;

- et un convertisseur (43) parallèle-série à huit entrées et une sortie qui reçoit un signal d'horloge de fréquence 128F0.

8. Opérateur de commutation, pour réseau modulaire de commutation en mode paquets, qui comporte un calculateur et auquel est reliée au moins une liaison numérique en mode "MIC", caractérisé en ce qu'il comporte au moins une interface selon l'une quelconque des revendications 1 à 7.

Fig.1

HD 1

2 5 6 7 0 1 2 3 4 5 6 7 0 1 2 3 4 5 6 7 0 1 2 3 4 5 6 7 0 1 2 3 4 5 6 7 0 1

3 4 5 6 7 8

4 1 2 3 4 5 6 7 8 1 2 3 4 5 6 7 8

I II

5

6 1 2 3 4 5 6 7 8 9 10 11 12 13 14 15 16

7

Fig.2

0042329

Fig. 3

3/5

0042329

Fig.4

4/5

0042329

TR(N)  TR(N+1)  TR(N+2)  TR(N+3)

31 4 8 12 16 20 24 28 | 1 5 9 13 17 21 25 29 | 2 6 10 14 18 22 26 30 | 3 7 11 15 19 23 27 31

Fig.5a

IT(i-1)  IT(i)  IT(i+1)

L  E  L  E  L  E

12,11,10,9,8,7,6,5,4,3,2,1

E  L  E  L  E  L

1,2,3,4

ET  PA

PAC

L  L  L

Fig.5b

0042329

| Catégorie | Citation du document avec indication, en cas de besoin, des parties pertinentes | Revendication concernée | CLASSEMENT DE LA DEMANDE (Int. Cl.³) |
|---|---|---|---|
| | **DOCUMENTS CONSIDERES COMME PERTINENTS** | | |
| A | FR - A - 2 310 051 (LE MATERIEL TELEPHONIQUE)<br><br>* page 3, ligne 30 - page 6, ligne 13; figure 4 *<br><br>--- | 1 | H 04 Q 11/04<br>H 04 L 11/20 |
| A | FR - A - 2 331 221 (TERMINAUX INTE-GRES DE TELECOMMUNICATIONS)<br><br>* page 6, ligne 18 - page 15, ligne 11; figures 3-7 *<br><br>--- | 1 | |
| E,P | EP - A - 0 025 753 (LE MATERIEL TELEPHONIQUE THOMSON-CSF)<br><br>* revendications 1-5; figures 1-3 *<br><br>--------- | 1<br><br>* | DOMAINES TECHNIQUES RECHERCHES (Int. Cl.³)<br><br>H 04 L 11/00<br>11/20<br>H 04 Q 11/04 |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-09-1981 | WANZEELE |

OEB Form 1503.1 06.78